# EUROPÄISCHE PATENTSCHRIFT

(11) **EP 1 971 800 B1**
(45) Veröffentlichungstag und Bekanntmachung des Hinweises auf die Patenterteilung: **13.03.2013**
(21) Anmeldenummer: 07703700.0
(22) Anmeldetag: 08.01.2007
(51) Int. Cl.: F16L 43/00, F16L 55/027

(54) **VORRICHTUNG ZUR UMLENKUNG EINES IN EINER ROHRLEITUNG STRÖMENDEN MEDIUMS**
DEVICE FOR DEFLECTING A MEDIUM FLOWING IN A PIPE
DISPOSITIF DE DEVIATION D'UN MILIEU S'ECOULANT DANS UNE CANALISATION

(30) Priorität: 10.01.2006 DE 102006001417
(43) Veröffentlichungstag der Anmeldung: 24.09.2008
(73) Patentinhaber: Endress+Hauser Flowtec AG, 4153 Reinach (CH)
(72) Erfinder: AXEL, Pfau, CH-4107 Ettingen (CH)
(74) Vertreter: Andres, Angelika Maria
(86) Internationale Anmeldenummer: PCT/EP2007/050149
(87) Internationale Veröffentlichungsnummer: WO 2007/080155

(56) Entgegenhaltungen:
- DE-A1- 2 319 333
- DE-A1- 19 847 174
- SU-A1- 901 680
- US-A- 3 645 298
- US-A- 5 529 093

## Beschreibung

Die Erfindung betrifft eine Vorrichtung zur Umlenkung eines in einer Rohrleitung strömenden Mediums. Eine Solche Vorrichtung ist z.B. aus SU 901680 bekannt.

In vielen technischen Anwendungsbereichen stellt sich die Aufgabe, ein ausgebildetes, rotationssymmetrisches Strömungsprofil drallfrei über eine gebogene Rohrleitung zu führen. Als Beispiel sei eine Kalibrieranlage für Durchflussmessgeräte genannt. Hierbei ist ein 90°-Krümmer eine übliche und notwendige geometrische Einheit, um die Strömungsrichtung des Mediums im Raum zu ändern. Wichtig für eine hochgenaue und reproduzierbare Kalibrierung eines Durchflussmessgeräts - die weiteren Ausführungen gelten im besonderen für magnetisch-induktive Messgeräte aber auch für andere Durchflussmessprinzipien, die auf der Erfassung des Geschwindigkeitsprofils beruhen (z.B. Ultraschall, thermisches Messprinzip) oder besonders empfindlich auf Änderungen im Geschwindigkeitsprofil (z.B. Vortex) sind - ist, dass das in der Rohrleitung strömende Medium ein in hohem Maße stationäres, rotationssymmetrisches, drallfreies Strömungsprofil aufweist. Damit also eine hochgenaue Kalibrierung erfolgen kann, muss sichergestellt werden, dass das Medium über eine definierte Einlaufstrecke vor dem zu kalibrierenden Durchflussmessgerät dieses stabile, rotationssymmetrische, drallfreies Strömungsprofil aufweist. Die definierte Einlaufstrecke ist beispielsweise ein ganzzahliges Vielfaches des Durchmessers der Rohleitung. Bei großen Nennweiten von über einem Meter - dieser Durchmesser ist bei magnetisch-induktiven Durchflussmessgeräten und bei Ultraschall-Durchflussmessgeräten keine Seltenheit - beträgt die Einlaufstrecke folglich mehrere Meter. Um eine Kalibrieranlage für Durchflussmessgeräte mit großer Nennweite zu installieren, muss daher ein entsprechend großer Raumbereich zur Verfügung stehen.

Unter dem Gesichtspunkt der Druckverlustminimierung bei der Umlenkung eines Mediums in einer Rohrleitung sind viele Formen von 90°-Krümmern bekannt geworden. Beispielhaft seien Rohrbogenkrümmer, Krümmer mit Leitblechen, Krümmer in Rohrsegmentbauweise oder numerisch optimierte Formen von Krümmern genannt. Bei der zuletzt genannten Ausgestaltung wird die Methode des inversen Designs mit Hilfe von Computerberechnungen angewendet.

Bei Kalibrieranlagen zur Kalibrierung von Durchflussmessgerät sind die zuvor genannten Krümmer nur bedingt einsetzbar - und dies gleich aus mehreren Gründen:
- Die genannten Krümmer erzeugen Störungen in der Strömung, die teilweise sehr stabil sind und von ihrem Entstehungsort bis über die Position des Durchflussmessgeräts hinaus nicht abklingen, d.h. die sich nicht ausmischen. Als mögliche Störungen sind hier insbesondere die Ausbildung von Sekundärwirbeln, eines Dralls, einer ungleichförmigen Massenverteilung (z.B. Schichtungen, Strähnen) in der Strömung und das Auftreten von nicht stationären Effekten zu nennen. Zur Beseiti-gung der Störungen/Effekte in der Strömung sind unterschiedliche Gleichrichterformen bekannt geworden. So kann eine Gleichrichtung durch erzwungene parallele Führung von Stromlinien unter Zuhilfe-nahme von Rohrbündeln, Zankergleichrichtern oder Wabengleich-richtern erfolgen. Weiterhin kann ein Ausmischen durch Erzeugen eines Druckverlusts in der Rohrleitung forciert werden. Der Druckverlust in der Rohrleitung kann durch Lochplatten, Gitter oder Vortabs erzeugt werden.

- Um beispielsweise eine Kalibrieranlage über die Methode des inversen Designs zu konstruieren, sind relativ hohe Investitionskosten erforderlich.
- Zudem benötigen Kalibrieranlagen, bei denen die zuvor genannten bekannten Rohrkrümmer eingesetzt werden, viel Platz.

Der Erfindung liegt die Aufgabe zugrunde, eine Vorrichtung vorzuschlagen, die es ermöglicht, ein in einer Rohrleitung strömendes Medium mit einem im wesentlichen stationären Strömungsprofil umzulenken, dabei seine Massenstromverteilung beizubehalten und einen eventuell vorhandenen Drall nach Art eines Rohrbündelgleichrichters in der Strömung zu entfernen. Bevorzugt ist das Strömungsprofil beim Einsatz der erfindungsgemäßen Vorrichtung in einer Kalibrieranlage für Durchflussmessgeräte über eine definierte Einlaufstrecke stationär, rotationssymmetrisch, drallfrei und voll ausgebildet.

Die Aufgabe wird durch den erfindungsgemäßen Rohrkrümmer gelöst, der die folgenden Teilkomponenten umfasst:
- Eine Vielzahl von Einzelröhren und zumindest eine erste Lochplatte und eine zweiten Lochplatte mit Ausnehmungen, wobei die Anzahl der Ausnehmungen in den beiden Lochplatten der Anzahl der Einzelrohre entspricht.
- Die erste Lochplatte ist im Bereich des Einlaufs und die zweite Lochplatte im Bereich des Auslaufs zwecks Halterung und Führung der Einzelrohre vorgesehen.

- Die Einzelrohre weisen in einem mittleren Bereich jeweils eine Biegung um einen vorgegebenen Biegewinkel auf, wobei der Biegewinkel jeder Einzelröhre so bemessen ist, dass die Einzelrohre ein Bündel mit im wesentlichen kreisförmigem Querschnitt bilden.
- Die Einzelrohre verlaufen im Bündel im wesentlichen parallel zueinander.
- Der Bereich des Einlaufs und der Bereich des Auslaufs von jedem Einzelrohr ist gerade ausgebildet.

Erfindungsgemäß wird der Gesamtmassenstrom in der Rohrleitung auf die Einzelrohre des Rohrkrümmers aufgeteilt und anschließend in eine neue Richtung umgelenkt. Durch die erfindungsgemäße Lösung wird die Ausbildung von Sekundärströmungen in den Einzelrohren sehr stark vermindert, da die Bildung von Sekundärströmungen in erster Näherung umgekehrt proportional zur relativen Krümmung der Einzelrohre ist. Der Druckverlust der Einzelrohre hängt also weniger von der Krümmung als vielmehr von der Länge der Einzelrohre ab. Als Folge davon wird die am Einlauf ausgebildete Massenstromverteilung quasi unverändert durch den erfindungsgemäßen Rohrkrümmer in eine andere Strömungsebene umgelenkt. Ist das Strömungsprofil am Einlauf des Rohrkrümmers stationär, voll ausgebildet, drallfrei und rotationssymmetrisch, so weist das Strömungsprofil diese Eigenschaften auch am Auslauf des Rohrkrümmers auf. Ein vorhandener Drall wird durch die erfindungsgemäße Lösung entfernt.

Gemäß einer vorteilhaften Weiterbildung der erfindungsgemäßen Vorrichtung sind die Einzelrohre bzw. die Ausnehmungen in den beiden Lochplatten in konzentrischen Ringschichten angeordnet sind. Beispielsweise ist ein Rohrkrümmer mit einer Nennweite von 1200 mm aus 63 Einzelröhren aufgebaut. Die Einzelrohre haben alle denselben Innendurchmesser d. Ein Einzelrohr ist zentral auf der Mittelachse des Rohrkrümmers angeordnet, die weiteren Einzelrohre sind in Ringschichten um die zentrale Einzelröhre plaziert. Bevorzugt sind die Einzelrohre und die Lochplatten aus Metall oder Kunststoff gefertigt.

Als besonders vorteilhaft wird die Ausgestaltung angesehen, wenn die erfindungsgemäße Vorrichtung Teil einer Kalibrieranlage ist oder die Ausbildung des Strömungsprofils besondere Wichtigkeit erlangt. Bevorzugt ist sie einem zu kalibrierenden Durchflussmessgerät vorgeschaltet.

Gemäß einer vorteilhaften Ausführungsform ist weiterhin eine Gleichrichter-platte vorgesehen, die nach dem Bereich des Auslaufs positioniert ist; die Gleichrichterplatte weist eine Vielzahl von Löchern auf, wobei die Anzahl der Löcher in der Gleichrichterplatte größer ist als die Anzahl der Ausnehmungen in einer der beiden Lochplatten. Durch die Verteilung der Löcher in der Gleichrichterplatte werden die beiden Sekundärwirbel, die in jedem Einzelrohr entstehen, gezielt verwirbelt und vernichtet. Bevorzugt wird die Gleichrichter-platte in einem definierten Abstand zur zweiten Lochplatte am Auslauf des Rohrkrümmers stromabwärts positioniert. Bevorzugt ist der definierte Abstand ungefähr halb so groß ist, wie die Nennweite der Rohrleitung.

Die Erfindung wird anhand der nachfolgenden Figuren näher erläutert. Es zeigt:

Fig. 1: eine Seitenansicht einer bevorzugten Ausgestaltung des erfindungs-gemäßen Rohrkrümmers,

Fig. 1a: eine Draufsicht auf den Rohrkrümmer gemäß der Kennzeichnung A-A in Fig. 1,

Fig. 1b: eine perspektivische Ansicht des Rohrkrümmers und

Fig. 2: ein eifindungsgemäßer Rohrkrümmer, der in einer Kalibiieranlage für Durchflussmessgeräte eingebaut ist.

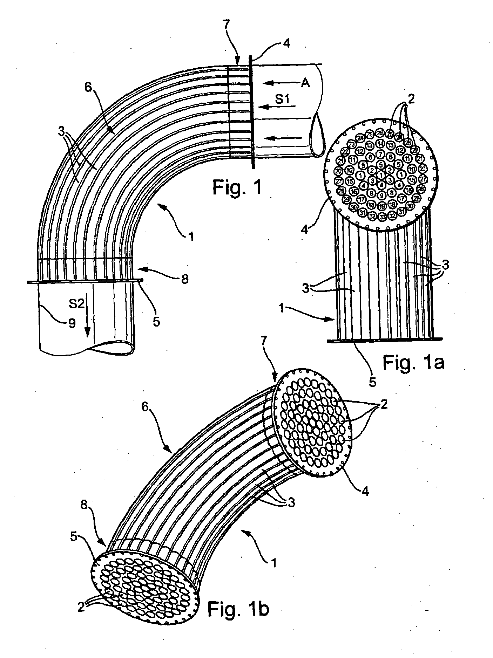

In den Figuren Fig. 1, Fig. 1a und Fig. 1b sind verschiedene Ansichten einer bevorzugten Ausgestaltung des erfindungsgemäßen Rohrkrümmers 1 darge-stellt. Der erfindungsgemäße Rohrkrümmer 1 besteht aus einer Vielzahl von Einzelröhren 3 und zumindest aus einer ersten Lochplatte 4 am Einlauf des Rohrkrümmers 1 und einer zweiten Lochplatte 5 am Auslauf des Rohr-krümmers 1. Beide Lochplatten 4, 5 weisen eine Vielzahl von Ausnehmungen 2 auf, wobei die Anzahl der Ausnehmungen 2 in den beiden Lochplatten 4, 5 der Anzahl der Einzelrohre 2 entspricht. Bevorzugt sind die Einzelrohre 3 und die Lochplatten 4, 5 aus Metall, beispielsweise aus Edelstahl, oder aus Kunststoff gefertigt.

Die erste Lochplatte 4 am Einlauf und die zweite Lochplatte 5 am Auslauf des Rohrkrümmers 1 dienen der Halterung und Führung der Einzelrohre 3. Die Einzelrohre 3 weisen in einem mittleren Bereich 6 jeweils eine Biegung um einen vorgegebenen Biegewinkel a auf, wobei der Biegewinkel a jeder Einzelröhre 3 so bemessen ist, dass die Einzelrohre 3 ein Bündel mit im wesentlichen kreisförmigem Querschnitt bilden. Im gezeigten Fall ist der Biegewinkel a gleich 90°. Im Bündel verlaufen die Einzelrohre 3 im wesentlichen parallel zueinander.

Im dargstellten Fall besteht der Rohrkrümmer 1 aus 63 Einzelrohren 3, wobei die Einzelrohre 3 einen identischen Innendurchmesser d aufweisen. Die Einzelrohre 3 sind auf konzentrischen Kreisen angeordnet. Ein Einzelrohr 3 ist zentral angeordnet, und um dieses zentral positionierte Einzelrohr 3 sind die weiteren Einzelrohre 3 in vier Lagen angeordnet. Die jeweilige, relative Krümmung eines Einzelrohres 3 hängt von seinem Krümmungsradius r und dem Innendurchmesser d ab. Ist das Verhältnis von Krümmungsradius R der Rohrleitung 11 zum Durchmesser D der Rohrleitung 11 bzw. des Rohr-krümmers 1 R/D gleich 1.5, so haben die Einzelrohre 3 eine relative Krümmung r zwischen 11 und 21. Der Bereich 7 des Einlaufs und der Bereich 8 des Auslaufs von jedem Einzelrohr 3 sind gerade ausgebildet und ein Vielfaches des Innendurchmessers d lang.

Wie bereits gesagt, besteht der Sinn und Zweck des erfindungsgemäßen Rohrkrümmers 1 darin, ein voll ausgebildetes, rotationssymmetrisches, drallfreies Strömungsprofil beispielsweise um 90° umzulenken und dabei seine Massenstromverteilung beizubehalten. Dazu wird der Gesamtmassen-strom in der Rohrleitung 9 auf die Einzelrohre 3 des Rohrkrümmers 1 aufgeteilt und anschließend in eine andere Richtung umgelenkt. Durch die erfindungsgemäße Lösung wird die Ausbildung von Sekundärströmungen in den Einzelrohren 3 sehr stark vermindert, da die Ausbildung von Sekundärströmungen in etwa umgekehrt proportional zur relativen Krümmung r/d ist. Der Druckverlust der Einzelrohre 3 hängt also weniger von der Krümmung r/d als vielmehr von der Länge der Einzelrohre 3 ab. Als Folge davon wird das am Einlauf ausgebildete Strömungsprofil quasi unverändert über den Rohrkrümmer 1 in eine andere Strömungsebene umgelenkt. Ist das Strömungsprofil SP am Einlauf des Rohrkrümmers 1 stationär, voll ausgebildet und rotationssymmetrisch, so weist das Strömungsprofil SP diese Eigenschaften zumindest näherungsweise auch am Auslauf des Rohr-krümmers 1 auf.

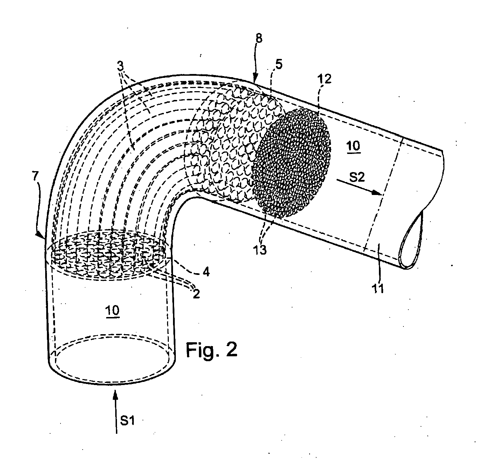

In Fig. 2 ist der erfindungsgemäße Rohrkrümmer 1 in einer Kalibrieranlage für Durchflussmessgeräte 11 eingebaut. Zwischen dem Rohrkrümmer 1 und dem Durchflussmessgerät 11, das kalibriert werden soll, ist eine Gleichrichterplatte 12 vorgesehen. Die Gleichrichterplatte 12 weist eine Vielzahl von Löchern 13 auf, wobei die Anzahl der Löcher 13 in der Gleichrichterplatte 12 größer ist als die Anzahl der Ausnehmungen 2 in den beiden Lochplatten 4, 5. Durch die Verteilung der Löcher 13 in der Gleichrichterplatte 12 werden die beiden Sekundärwirbel, die in jedem Einzelrohr 3 entstehen, gezielt verwirbelt und vernichtet. Bevorzugt wird die Gleichrichterplatte 12 in einem Abstand zur zweiten Lochplatte 5 am Auslauf des Rohrkrümmers 1 stromabwärts in einem Abstand positioniert, der näherungsweise halb so groß ist, wie die Nennweite D der Rohrleitung 9.

**Bezugszeichenliste**

- 1: Rohrkrümmer
- 2: Ausnehmungen
- 3: Einzelrohre
- 4: erste Lochplatte
- 5: zweite Lochplatte
- 6: mittlerer Bereich
- 7: Einlaufbereich
- 8: Auslaufbereich
- 9: Rohrleitung
- 10: Medium
- 11: Durchflussmessgerät
- 12: Gleichrichterplatte
- 13: Loch

## Patentansprüche

1. Vorrichtung zur Umlenkung eines in einer Rohrleitung (9) strömenden Mediums (10) mit einer Vielzahl von Einzelrohren (3) und mit zumindest einer ersten Lochplatte (4) und einer zweiten Lochplatte (5) mit einer Vielzahl von Ausnehmungen (2),
wobei die erste Lochplatte (4) im Bereich des Einlaufs und wobei die zweite Lochplatte (5) im Bereich des Auslaufs zwecks Halterung und Führung der Einzelrohre (3) vorgesehen ist,
wobei die Anzahl der Ausnehmungen (2) in den beiden Lochplatten (4, 5) der Anzahl der Einzelrohre (3) entspricht,
wobei die Einzelrohre (3) in einem mittleren Bereich (6) jeweils eine Biegung um einen vorgegebenen Biegewinkel (α) aufweisen,
wobei der Biegewinkel (α) von jedem Einzelrohr (3) so bemessen ist, dass die Einzelrohre (3) ein Bündel mit im wesentlichen kreisförmigem Querschnitt bilden,
wobei die Einzelrohre (3) im Bündel im wesentlichen parallel zueinander verlaufen und
wobei der Einlaufbereich (7) und der Auslaufbereich (8) von jedem Einzelrohr (3) gerade ausgebildet sind,
wobei die Einzelrohre (3) bzw. die Ausnehmungen (2) in den Lochplatten (4, 5) in konzentrischen Ringschichten angeordnet sind,
wobei die Einzelrohre (3) denselben Innendurchmesser d aufweisen.

2. Vorrichtung nach Anspruch 1,
wobei die Einzelrohre (3) und die Lochplatten (4, 5) aus Metall oder Kunststoff gefertigt sind.

3. Vorrichtung nach Anspruch 1 oder 2,
wobei die Vorrichtung Teil einer Kalibrieranlage und einem zu kalibrierenden Durchflussmessgerät (11) vorgeschaltet ist.

4. Vorrichtung nach Anspruch 1 oder 3,
wobei eine Gleichrichterplatte (12) vorgesehen ist, die stromabwärts nach dem Auslaufbereich (8) positioniert ist,
wobei die Gleichrichterplatte (12) eine Vielzahl von Löchern (14) aufweist und wobei die Anzahl der Löcher (13) in der Gleichrichterplatte (13) größer ist als die Anzahl der Ausnehmungen (2) in einer der beiden Lochplatten (4, 5).

## Claims

1. Unit to divert a medium (10) flowing through a pipe (9) with a large number of individual pipes (3) and with at least a first perforated plate (4) and a second perforated plate (5) with a large number of cavities (2),
wherein the first perforated plate (4) is provided in the area of the inlet, and the second perforated plate (5) is provided in the area of the outlet, for the purpose of holding and guiding the individual pipes (3),
wherein the number of cavities (2) in the two perforated plates (4, 5) corresponds to the number of individual pipes (3),
wherein the individual pipes (3) curve around a predefined bending angle (α) in a middle section,
wherein the bending angle (α) of each individual pipe (3) is such that the individual pipes (3) form a bundle with an essentially circular cross-section,
wherein the individual pipes (3) are essentially parallel to one another in the bundle, and
wherein the inlet area (7) and the outlet area (8) of each individual pipe (3) are straight,
wherein the individual pipes (3) and the cavities (2) are arranged in the perforated plates (4,5) in concentric ring layers,
wherein the individual pipes (3) have the same internal diameter 'd'.

2. Unit as claimed in Claim 1,
wherein the individual pipes (3) and the perforated plates (4, 5) are made from metal or plastic.

3. Unit as claimed in Claim 1 or 2,
wherein the unit is part of a calibration rig and is upstream from a flowmeter (11) to be calibrated.

4. Unit as claimed in Claim 1 or 3,
wherein a rectifier plate (12) is provided which is positioned downstream after the outlet area (8),
wherein the rectifier plate (12) has a large number of cavities (14) and wherein the number of cavities (13) in the rectifier plate (13) is larger than the number of cavities (2) in one of the perforated plates (4, 5).

## Revendications

1. Dispositif destiné au renvoi d'un produit (10) s'écoulant dans une conduite (9) avec un grand nombre de tubes individuels (3) et avec au moins une première plaque perforée (4) et une deuxième plaque perforée (5) avec un grand nombre de cavités (2),
pour lequel la première plaque perforée (4) est prévue dans la zone d'entrée et pour lequel la deuxième plaque perforée (5) est prévue dans la zone de sortie à des fins de maintien et de guidage des tubes individuels (3),
pour lequel le nombre de cavités (2) dans les deux plaques perforées (4, 5) correspond au nombre de tubes individuels (3),
pour lequel les tubes individuels (3) présentent dans une zone centrale (6) respectivement une courbure autour d'un angle de courbure (α) prédéfini,
pour lequel l'angle de courbure (α) de chaque tube individuel (3) est dimensionné de telle sorte que les tubes individuels (3) forment un faisceau de section pour l'essentiel circulaire,
pour lequel les tubes individuels (3) formés en un faisceau sont pour l'essentiel parallèles les uns par rapport aux autres,
pour lequel la zone d'entrée (7) et la zone de sortie (8) de chaque tube individuel (3) sont exécutées de façon rectiligne,
pour lequel les tubes individuels (3) et les cavités (2) sont disposés dans les plaques perforées (4,5) en couches annulaires concentriques,
pour lequel les tubes individuels (3) présentent un diamètre intérieur'd' identique.

2. Dispositif selon la revendication 1,
pour lequel les tubes individuels (3) et les plaques perforées (4, 5) sont fabriqués en métal ou en matière plastique.

3. Dispositif selon la revendication 1 ou 2,
pour lequel le dispositif fait partie d'un banc d'étalonnage et est couplé en amont d'un débitmètre (11) à étalonner.

4. Dispositif selon la revendication 1 ou 3,
pour lequel est prévue une plaque de redresseur (12), laquelle est positionnée en aval de la zone de sortie (8),
la plaque de redresseur (12) présentant un grand nombre de trous (13) et le nombre de trous (13) réalisés dans la plaque de redresseur (12) étant supérieur au nombre de cavités (2) réalisées dans les deux plaques perforées (4, 5).
